(19) Europäisches Patentamt
European Patent Office
Office européen des brevets

(11) **EP 3 872 445 B1**

(12) **EUROPÄISCHE PATENTSCHRIFT**

(45) Veröffentlichungstag und Bekanntmachung des Hinweises auf die Patenterteilung:
**27.03.2024   Patentblatt 2024/13**

(21) Anmeldenummer: **20159181.5**

(22) Anmeldetag: **25.02.2020**

(51) Internationale Patentklassifikation (IPC):
**G01B 11/06** (2006.01)

(52) Gemeinsame Patentklassifikation (CPC):
**G01B 11/0658**

(54) **SCHICHTDICKENMESSUNG DURCH AUSWERTUNG DES SPEKTRUMS DER FLUORESZENZEMISSION**

COATING THICKNESS MEASUREMENT THROUGH EVALUATION OF THE SPECTRUM OF FLUORESCENCE EMISSION

MESURE D'ÉPAISSEUR DE COUCHE PAR ÉVALUATION DU SPECTRE DE L'ÉMISSION DE FLUORESCENCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**01.09.2021   Patentblatt 2021/35**

(73) Patentinhaber: **Fraunhofer-Gesellschaft zur Förderung
der angewandten Forschung e.V.
80686 München (DE)**

(72) Erfinder: **HOLZ, Philipp
79110 Freiburg (DE)**

(74) Vertreter: **WSL Patentanwälte Partnerschaft mbB
Kaiser-Friedrich-Ring 98
65185 Wiesbaden (DE)**

(56) Entgegenhaltungen:
**US-A- 4 841 156      US-A1- 2014 176 965
US-B1- 6 252 237**

• **CARLOS HIDROVO ET AL: "2D Thickness and Temperature Mapping of Fluids by Means of a Two-Dye Laser Induced Fluorescence Radiometric Scheme", JOURNAL OF FLOW VISUALIZATION & IMAGE PROCESSING, Bd. 9, 1. Januar 2002 (2002-01-01), Seiten 171-191, XP055117124,**

**Beschreibung**

Die vorliegende Erfindung betrifft ein Verfahren zum Bestimmen einer Dicke einer Schicht einer fluoreszierenden Substanz nach Anspruch 1.

Die vorliegende Erfindung betrifft darüber hinaus eine Vorrichtung zum Bestimmen einer Dicke einer Schicht einer fluoreszierenden Substanz nach Anspruch 5.

In Zeiten von Ressourceneinsparung und Optimierung von Produktionsprozessen ist die Bestimmung einer Dicke einer Schicht in vielen industriellen Anwendungen essenziell. Optimale Beschichtungsdicken, die den Einsatz kostenintensiver Materialien so gering wie möglich halten, jedoch gleichzeitig die Funktionalität einer Beschichtung nicht beinträchtigen, werden in teils aufwändigen Vorabmessreihen bestimmt. Die anschließende Überwachung entsprechender Beschichtungsprozesse ist sinnvoll, um sicherzustellen, dass die bestimmten Schichtdicken auch eingehalten werden. Beispielhaft sei hier die funktionelle Beschichtung von Metallen in diversen Anwendungsgebieten genannt, welche z.B. sowohl der Haftvermittlung als auch der Schmierung verschiedener Komponenten dient.

Darüber hinaus besteht auch ein Bedarf an der Überwachung und Vermessung ungewollter Verunreinigungen auf anderen prozessrelevanten Materialien, insbesondere auf Metall, wie beispielsweise Rückständen von Prozesshilfsstoffen auf Halbzeugen oder Verunreinigungen in Anlagen zur Lebensmittelherstellung. Die Ermittlung des Verschmutzungsgrades ist insbesondere für anschließende Prozessschritte aber auch zur Sicherung von Hygienestandards von großer Bedeutung. Aus dem Stand der Technik sind verschiedene Verfahren zur Schichtdickenmessung bekannt. Ein mögliches Verfahren besteht beispielsweise darin, eine Beschichtung zur Fluoreszenz anzuregen und ein detektiertes Fluoreszenzsignal hinsichtlich der Schichtdicke auszuwerten. Dabei kommen sowohl Stoffe infrage, die von sich aus fluoreszieren (Eigenfluoreszenz) oder denen zusätzlich Fluoreszenzfarbstoffe beigemischt werden, um ein Fluoreszenzsignal erfassen zu können. Verfahren zur Messung der Schichtdicke auf der Basis des Detektierens eines Fluoreszenzsignals sind in den folgenden Dokumenten beschrieben: US 2014/176965 A1, US 4 841 156 A, CARLOS HIDROVO ET AL: "2D Thickness and Temperature Mapping of Fluids by Means of a Two-Dye Laser Induced Fluorescence Radiometric Scheme", JOURNAL OF FLOW VISUALIZATION & IMAGE PROCESSING, Bd. 9, 1. Januar 2002 (2002-01-01), Seiten 171-191, sowie US 6 252 237 B1.

Um die Dicke einer Schicht anhand einer Fluoreszenzmessung auszuwerten, wird in der Regel die Leistung $P_{em}$ der Fluoreszenzemission als Funktion der Schichtdicke ausgewertet. Vereinfacht kann die emittierte Leistung $P_{em}$ der Fluoreszenzstrahlung durch folgenden Zusammenhang beschrieben werden:

$$P_{em} = P_0 Q \frac{\lambda_{ex}}{\lambda_{em}} (1 - e^{-\alpha d})$$

wobei $P_0$ die Leistung der Anregungsstrahlung, $\lambda_{ex}$ die Anregungswellenlänge der Anregungsstrahlung, $\lambda_{em}$ die Fluoreszenzwellenlänge der emittierten Fluoreszenzstrahlung, $Q \lambda_{ex}/\lambda_{em}$ die schichtspezifischen Fluoreszenzeigenschaften, $\alpha$ die schichtspezifischen Absorptionseigenschaften bezüglich der Anregungsstrahlung und d die optische Weglänge der Anregungsstrahlung beschreiben. Allen Auswertungen, die auf dieser Art der Messung und Auswertung beruhen, ist gemein, dass lediglich die optische Weglänge der Anregungsstrahlung ausgewertet wird, die jedoch, wie nachfolgend erläutert, nicht in jedem Fall identisch mit der wirklichen Schichtdicke h einer Schicht ist.

Um anhand dieses Zusammenhangs eine Schichtdicke einer Probe auszuwerten, müssen die Faktoren $P_0$, $Q \lambda_{ex}/\lambda_{em}$ und $\alpha$ bekannt sein. Sind die Werte nicht exakt bekannt, so ist aus dem Stand der Technik bekannt, Messsysteme zunächst an Proben mit bekannter Schichtdicke h zu kalibrieren, wobei die Faktoren $P_0$, Q und $\alpha$ für nachfolgende Messungen als konstant angenommen werden.

Diese Art der Schichtdickenbestimmung hat mehrere Nachteile. Ein Nachteil besteht darin, dass die Leistung der Anregungsstrahlung $P_0$ nur dann als konstant angenommen werden kann, wenn sich die Intensität der Beleuchtung nach der Kalibrierung des Messsystems nicht mehr ändert. Dies ist jedoch für viele Systeme in der Praxis nicht gegeben. So kann die Leistung der Anregungsstrahlung zeitlich schwanken und eine Referenzmessung und eine Probenmessung, die zeitlich voneinander beabstandet sind, bei einer unterschiedlichen Anregungsleistung erfolgen. Änderungen der Anregungsleistung sind beispielsweise auch bei der Ausleuchtung von Proben in bildgebenden Systemen kritisch, wenn einzelne Bildpixel bei unterschiedlicher Anregungsleistung erfasst werden und anschließend miteinander verglichen werden sollen. Änderungen der Anregungsleistung entstehen beispielsweise durch Schwankungen bei der Einkopplung der Anregungsstrahlung in eine Faser. Aber auch thermische Umgebungseinflüsse führen zu Änderungen in der Anregungsleistung.

Aus dem Stand der Technik, zum Beispiel aus US 2014/176965 A1, und aus CARLOS HIDROVO ET AL: "2D Thickness and Temperature Mapping ofFluids by Means of a Two-Dye Laser Induced Fluorescence Radiometric Scheme", JOURNAL OF FLOW VISUALIZATION & IMAGE PROCESSING, Bd. 9, 1. Januar 2002 (2002-01-01), Seiten 171-191, sind Verfahren bekannt, bei welchen der zu untersuchenden Substanz zusätzliche Fluoreszenzfarbstoffe beigemischt werden. Anschließend wird die von den verschiedenen Farbstoffen abgestrahlte Fluoreszenzstrahlung miteinander ins Verhältnis gesetzt, sodass die Bestimmung der Schichtdicke unabhängig von der Leistung der Anregungsstrahlung bestimmt werden kann.

In der Praxis soll jedoch häufig eine bereits für eine Anwendung qualifizierte Beschichtung messtechnisch überprüft werden. Hier ist die nachträgliche Beimischung von fluoreszierenden Farbstoffen nicht möglich oder zumindest mit spürbaren Nachteilen verbunden. So kann die Beimischung von fluoreszierenden Farbstoffen beispielsweise zu einer eingeschränkten Funktionalität der Beschichtung führen. Darüber hinaus verursacht die Beimischung mehrerer Farbstoffe auch zusätzliche Materialkosten, die es im Rahmen der Ressourceneinsparung zu vermeiden gilt.

Ein weiterer Nachteil bei aus dem Stand der Technik bekannten Verfahren besteht, wie oben angedeutet, darin, dass bei der Auswertung anhand der oben genannten Formel nur die optische Weglänge d des Anregungslichtes innerhalb des absorbierenden Mediums berücksichtigt wird. Je nach Orientierung der Probe kann diese optische Weglänge d jedoch signifikant von der eigentlich zu bestimmenden Schichtdicke h abweichen. Befinden sich beispielsweise Öltropfen auf spiegelnden Untergründen, kommt es zu einer Lichtleitung der Anregungsstrahlung innerhalb des flachen Tropfens, sodass es zu einer ausgeprägten Abweichung zwischen der optischen Weglänge d und der tatsächlichen Schichtdicke h des Tropfens kommt.

In der US 2014/176965 A1 werden beispielsweise die Dämpfung und andere optische Eigenschaften eines Mediums ausgenutzt, um die Dicke des Mediums zwischen einem Sensor und einer Zieloberfläche zu messen. Es werden verschiedene Medien, Anordnungen von Hardware und Verarbeitungstechniken vorgestellt, die zur Erfassung der Dickenmessungen und zum Erhalt dreidimensionaler Bilder der Zieloberfläche in einer Vielzahl von Abbildungskontexten verwendet werden können.

Der vorliegenden Erfindung liegt daher die Aufgabe zugrunde, ein Verfahren und eine Vorrichtung zum Bestimmen einer Dicke einer Schicht einer fluoreszierenden Substanz bereitzustellen, welche das Bestimmen der Dicke der Schicht anhand von Fluoreszenzmessungen vereinfachen und gleichzeitig präzisieren, wobei die fluoreszierende Substanz ein Beschichtungsmittel in Form eines Öltropfens ist.

Zumindest eine der zuvor benannten Aufgaben wird erfindungsgemäß durch ein Verfahren zum Bestimmen einer Dicke einer Schicht einer fluoreszierenden Substanz gelöst, wobei die fluoreszierende Substanz einen wellenlängenabhängigen Absorptionskoeffizienten und eine wellenlängenabhängige Fluoreszenz aufweist, wobei der Absorptionskoeffizient zumindest bei einer ersten oder einer zweiten Fluoreszenzwellenlänge einen von Null verschiedenen Wert aufweist und wobei das Verfahren die folgenden Schritte aufweist:

A) Anregen der Schicht mit einer elektromagnetischen Anregungsstrahlung,

B) Erfassen einer ersten Leistung einer von der Schicht mit einer ersten Fluoreszenzwellenlänge abgestrahlten Fluoreszenzstrahlung, und

C) Erfassen einer zweiten Leistung einer von der Schicht mit einer zweiten Fluoreszenzwellenlänge abgestrahlten Fluoreszenzstrahlung, wobei die erste Fluoreszenzwellenlänge und die zweite Fluoreszenzwellenlänge voneinander verschieden sind und wobei die erste und die zweite Leistung von Null verschiedene Werte aufweisen,

D) Bilden eines Quotienten aus der ersten Leistung und der zweiten Leistung, und

E) Ableiten der Dicke der Schicht aus dem Quotienten,

wobei die Anregungsstrahlung eine Anregungswellenlänge hat, und
wobei die Anregungswellenlänge und die erste und zweite Fluoreszenzwellenlänge voneinander verschieden sind,
wobei die fluoreszierende Substanz ein Beschichtungsmittel in Form eines Öltropfens ist,
wobei der Öltropfen auf einem spiegelnden Untergrund angeordnet ist,
wobei die erfasste erste und zweite Leistung ausschließlich auf der Eigenfluoreszenz der fluoreszierenden Substanz basiert, sodass der fluoreszierenden Substanz keine zusätzlichen Farbstoffe beigemischt werden, und
wobei eine optische Weglänge der Fluoreszenzstrahlung ausgewertet wird, sodass die in Schritt E) abgeleitete Dicke der Schicht unabhängig von der Orientierung der Probe ist.

Unter einer fluoreszierenden Substanz wird erfindungsgemäß eine Substanz verstanden, die von sich aus bei entsprechender Anregung Fluoreszenzstrahlung aussendet. Die fluoreszierende Substanz muss einen wellenlängenabhängigen Absorptionskoeffizienten ($\alpha$) und eine wellenlängenabhängige Fluoreszenz aufweisen, wobei die erste und zweite Leistung der Fluoreszenzstrahlung von Null verschiedene Werte aufweisen und der Absorptionskoeffizient der Substanz zumindest bei der ersten oder der zweiten Fluoreszenzwellenlänge einen von Null verschiedenen Wert aufweist. Darüber hinaus sind zumindest in einer Ausführungsform der erste Absorptionskoeffizient bei der ersten Fluoreszenzwellenlänge und der zweite Absorptionskoeffizient bei der zweiten Fluoreszenzwellenlänge voneinander verschieden.

Um den oben beschriebenen Nachteil einer schwankenden Leistung der Anregungsstrahlung auszugleichen, bedarf das erfindungsgemäße Verfahren keiner Beimischung zusätzlicher fluoreszierender Farbstoffe. Es versteht sich, dass die Verwendung eines fluoreszierenden Farbstoffs jedoch möglich ist, sofern eine Schicht mit einem nicht von sich aus fluoreszierenden Material untersucht werden soll. Hierbei genügt jedoch die Beimischung eines einzigen Farbstoffs. Dieser Farbstoff bildet dann einen Teil der fluoreszierenden Substanz der Schicht. In diesem Fall hat der Farbstoff einen wellenlängenabhängigen Absorptionskoeffizienten und eine wellenlängenabhängige Fluoreszenz, wobei die erste und zweite Leistung der Fluoreszenzstrahlung von Null verschiedene Werte aufweisen und der Absorptionskoeffizient der Substanz zumindest bei der ersten oder der zweiten Fluoreszenzwellenlänge einen von Null verschiedenen Wert aufweist.

Erfindungsgemäß werden jedoch der fluoreszierenden Substanz keine zusätzlichen Farbstoffe beigemischt.

Darüber hinaus sind der erste Absorptionskoeffizient bei der ersten Fluoreszenzwellenlänge und der zweite Absorptionskoeffizient bei der zweiten Fluoreszenzwellenlänge voneinander verschieden.

Eine Fluoreszenzwellenlänge bezeichnet im Sinne der vorliegenden Anmeldung einen Bereich mit einer endlichen Bandbreite um einen exakten Wert der jeweiligen Wellenlänge herum. In einer Ausführungsform der Erfindung sind die Bandbreiten der ersten Fluoreszenzwellenlänge und der zweiten Fluoreszenzwellenlänge durch die Eigenschaften von Filtern der Messeinrichtung bzw. von Filtern vor einem oder mehreren Detektoren der Messeinrichtung gegeben.

Erfindungsgemäß basiert die erfasste erste und zweite Leistung der Fluoreszenzstrahlung ausschließlich auf der Eigenfluoreszenz der Substanz, d.h. dass der Substanz keine zusätzlichen fluoreszierenden Farbstoffe (Fluorochrome) beigemischt werden. Der Verzicht auf die Beimischung von zusätzlichen fluoreszierenden Farbstoffen führt zu einer Einsparung von Kosten einerseits und andererseits wird die Funktionalität der Substanz, insbesondere eines Beschichtungsmittels, nicht beeinträchtigt. Durch das erfindungsgemäße Verfahren wird auch bei einem Verzicht auf zusätzliche fluoreszierende Farbstoffe die Genauigkeit der Schichtdickenmessung nicht beeinträchtigt.

Erfindungsgemäß handelt es sich bei der fluoreszierenden Substanz weiter um ein Beschichtungsmittel. Unter Beschichtungsmitteln werden im Sinne der vorliegenden Erfindung insbesondere solche Substanzen verstanden, die aufgrund ihrer Funktionalität bei verschiedenen industriellen Prozessen üblicherweise zur Anwendung kommen. Hierunter fallen in der Regel keine Substanzen, denen Fluorochrome beigemischt sind.

Um Schwankungen in der Leistung der Anregungsstrahlung auch ohne den Zusatz von Fluorochromen begegnen zu können, liegt dem erfindungsgemäßen Verfahren die Idee zugrunde, dass Schwankungen in der Leistung der Anregungsstrahlung durch die Auswertungen bei zwei verschiedenen Fluoreszenzwellenlängen eliminiert werden. Durch die Bildung des Quotienten der bei einer ersten Fluoreszenzwellenlänge erfassten ersten Leistung und der bei einer zweiten Fluoreszenzwellenlänge erfassten zweiten Leistung hebt sich der Anteil der Anregungsleistung an der erfassten Leistung der Fluoreszenzstrahlung auf.

Zudem wird ausgenutzt, dass eine Vielzahl von Stoffen einen Überlapp zwischen Absorptions- und Fluoreszenzspektrum zeigen. Dies führt zu einer Reabsorption der kurzwelligen Fluoreszenzemission, wobei die Absorption der kurzwelligen Fluoreszenzemission wiederum gemäß dem Lambert-Beer'schen Gesetz abhängig von der Schichtdicke ist. D.h. die Auswertung der Schichtdicke der fluoreszierenden Substanz erfolgt bei dem erfindungsgemäßen Verfahren analog zu der oben wiedergegebenen Formel auch auf Basis des Lambert-Beer'schen Gesetzes, jedoch wird nicht die Absorption der Anregungsstrahlung betrachtet, sondern die Absorption der abgestrahlten Fluoreszenzstrahlung.

So wird anstelle der optischen Weglänge der Anregungsstrahlung, die optische Weglänge der Fluoreszenzstrahlung ausgewertet, die unabhängig von der Orientierung der Probe im Wesentlichen der Schichtdicke der fluoreszierenden Substanz entspricht.

Dies liegt daran, dass die zur Fluoreszenz angeregten Moleküle vereinfacht als Kugelstrahler angenommen werden können, die die Fluoreszenzstrahlung isotrop innerhalb der Schicht abgeben. Bei dem abgestrahlten Fluoreszenzlicht kommt es also nicht zu einer Lichtleitung innerhalb eines Beschichtungsmittels, sondern die optische Weglänge der Fluoreszenzstrahlung entspricht immer im Wesentlichen der tatsächlichen Dicke der Schicht. Durch die Betrachtung der Absorption der Fluoreszenzstrahlung kann damit die Schichtdicke unabhängig von der Orientierung der Probe bestimmt werden.

Das Anregen der Schicht der fluoreszierenden Substanz gemäß dem erfindungsgemäßen Verfahren erfolgt in einer Ausführungsform mit Hilfe einer Quelle, die elektromagnetische Strahlung mit einer Anregungswellenlänge abstrahlt, wobei die in der Anregungswellenlänge kodierte Energie der elektromagnetischen Strahlung einer Energielücke der Moleküle der zu untersuchenden Substanz entspricht. So sind Photonen in der Lage, Moleküle der zu untersuchenden Substanz in einen energetisch höheren Zustand anzuregen. Es versteht sich, dass die verwendete Anregungsstrahlung daher jeweils an die konkreten Anwendungsfälle angepasst wird, je nachdem welche Substanz untersucht werden soll.

In einer Ausführungsform ist die Quelle ein Laser, eine Leuchtdiode oder ein thermischer Strahler mit einem Wellenlängenfilter.

Erfindungsgemäß wird zudem eine Anregungswellenlänge der Anregungsstrahlung so gewählt, dass sie von der ersten und zweiten Fluoreszenzwellenlänge verschieden ist. Dies bietet den Vorteil, dass Anregungsstrahlung, die an einer Schicht unterhalb der zu vermessenden Schicht reflektiert wurde, nicht mit in die Auswertung der Schichtdicke einfließt. Dies ist insbesondere bei stark reflektierenden Materialien wie Metallen von hoher Relevanz.

Das Erfassen der ersten und zweiten Leistung der abgestrahlten Fluoreszenzstrahlung bei der ersten und zweiten Fluoreszenzwellenlänge erfolgt beispielsweise mit einer Fotodiode, einem Photomultiplier oder einem Spektrometer. Dabei ist die Wahl des konkreten Detektors an die zu erfassende Strahlung anzupassen.

In einer Ausführungsform des erfindungsgemäßen Verfahrens wird die erste oder die zweite Fluoreszenzwellenlänge so gewählt, dass der erste oder der zweite Absorptionskoeffizient der fluoreszierenden Substanz bei der gewählten ersten oder zweiten Wellenlänge kleiner ist als der jeweils andere der ersten oder zweiten Absorptionskoeffizienten. In einer weiteren Ausführungsform der Erfindung wird die erste oder die zweite Fluoreszenzwellenlänge so gewählt, dass der erste oder der zweite Absorptionskoeffizient der fluoreszierenden Substanz bei der gewählten ersten oder zweiten Wellenlänge die Hälfte oder weniger des jeweils anderen der ersten oder zweiten Absorptionskoeffizienten beträgt. In noch einer weiteren Ausführungsform der Erfindung wird die erste oder die zweite Fluoreszenzwellenlänge so gewählt, dass der erste oder der zweite Absorptionskoeffizient der fluoreszierenden Substanz bei der gewählten ersten oder zweiten Wellenlänge ein Zehntel oder weniger des jeweils anderen der ersten oder zweiten Absorptionskoeffizienten beträgt. Je größer der Unterschied zwischen den beiden Absorptionskoeffizienten ist, desto größer ist die Differenz der Absorption des Fluoreszenzlichts. Somit steigt die Genauigkeit der Messung mit dem Unterschied zwischen den Absorptionskoeffizienten.

Für das erfindungsgemäße Verfahren bestehen weiterhin zwei Möglichkeiten, um die Dicke der Schicht aus dem Quotienten abzuleiten. In einer Ausführungsform des Verfahrens umfasst dieses daher weiterhin die Schritte: Bereitstellen eines vorherbestimmten ersten Absorptionskoeffizienten der fluoreszierenden Substanz bei der ersten Fluoreszenzwellenlänge und Bereitstellen eines vorherbestimmten zweiten Absorptionskoeffizienten der fluoreszierenden Substanz bei der zweiten Fluoreszenzwellenlänge, wobei der erste Absorptionskoeffizient und der zweite Absorptionskoeffizient voneinander verschieden sind und wobei das Ableiten der Dicke der Schicht aus dem Quotienten in Schritt E) unter Verwendung der ersten und zweiten Absorptionskoeffizienten erfolgt.

Bereitstellen eines vorherbestimmten Absorptionskoeffizienten im Sinne des erfindungsgemäßen Verfahrens bedeutet, dass der Absorptionskoeffizient zumindest bei den beiden ausgewählten Fluoreszenzwellenlängen für die zu untersuchende Probe aus einer vorangegangenen Messung oder der Literatur bekannt ist und als Wert oder Funktion dem Ableiten der Dicke in Schritt E) zu Grunde gelegt werden kann. Vorteilhaft wird bei der Auswertung eine Funktion des Absorptionskoeffizienten in Abhängigkeit von der Wellenlänge bereitgestellt, sodass für beliebige Fluoreszenzwellenlängen Absorptionskoeffizienten zur Verfügung stehen,

Diese Ausführungsform bietet den Vorteil, dass lediglich die vorherbestimmten Absorptionskoeffizienten der zu untersuchenden Schicht bei zwei verschiedenen Wellenlängen zur Verfügung gestellt werden müssen und eine zeitaufwendige Kalibrierung des Messsystems entfällt. Gleichzeitig ist das Messsystem dennoch unabhängig gegenüber Schwankungen in der Anregungsleistung, der Orientierung der zu messenden Schicht oder den beigefügten fluoreszierenden Farbstoffen. Zudem ist die Bestimmung der Schichtdicke gemäß dieser Ausführungsform im Vergleich zu einer Kalibration genauer, da auch aus Quotienten, die zuvor nicht kalibriert wurden, eine Schichtdicke exakt abgeleitet werden kann und nicht zwischen einzelnen Kalibrationspunkten interpoliert werden muss.

In einer weiteren Ausführungsform des erfindungsgemäßen Verfahrens erfolgt das Ableiten der Dicke der Schicht aus dem Quotienten in Schritt E) unter Verwendung von Kalibrationsdaten, wobei die Kalibrationsdaten bei Messung der Leistungen gemäß der Schritte A) bis D) an einer Mehrzahl von Schichten mit jeweils einer bekannten Dicke gewonnen werden, sodass dem in Schritt D) gebildeten Quotienten eine Dicke der Schicht zuordenbar ist. Diese Ausführungsform bietet den Vorteil, dass das Absorptionsspektrum der zu vermessenden Schicht nicht bekannt sein muss.

Ferner wird zumindest eine der eingangs genannten Aufgaben durch eine Vorrichtung zum Bestimmen einer Dicke einer Schicht einer fluoreszierenden Substanz gelöst, aufweisend eine Anregungsstrahlungsquelle, wobei die Anregungsstrahlungsquelle derart eingerichtet ist, dass mit der Anregungsstrahlungsquelle während des Betriebs der Vorrichtung eine elektromagnetische Anregungsstrahlung auf die Schicht abstrahlbar ist, eine Messeinrichtung, wobei die Messeinrichtung derart eingerichtet ist, dass während des Betriebs der Vorrichtung mit der Messeinrichtung eine erste Leistung einer von der Schicht mit einer ersten Fluoreszenzwellenlänge abgestrahlten Fluoreszenzstrahlung erfassbar ist, und eine Auswertungseinrichtung, wobei die Messeinrichtung derart eingerichtet ist, dass mit der Messeinrichtung während des Betriebs der Vorrichtung weiterhin eine zweite Leistung einer von der Schicht mit einer zweiten Fluoreszenzwellenlänge abgestrahlten Fluoreszenzstrahlung erfassbar ist, wobei die erste Fluoreszenzwellenlänge und die zweite Fluoreszenzwellenlänge voneinander verschieden sind und wobei die Auswertungseinrichtung derart wirksam mit der Messeinrichtung verbunden ist, dass während des Betriebs der Vorrichtung die von der Messeinrichtung erfasste erste und zweite Leistung an die Auswertungseinrichtung übergeben werden, wobei die Auswertungseinrichtung derart eingerichtet ist, dass die Auswertungseinrichtung während des Betriebs der Vorrichtung einen Quotienten aus der ersten und zweiten Leistung bildet und aus dem Quotienten die Dicke der Schicht ableitet, wobei die Anregungsstrahlung eine Anregungswellenlänge hat, wobei die Anregungswellenlänge und die erste und zweite Fluoreszenzwellenlänge voneinander verschieden sind, wobei die Vorrichtung die fluoreszierende Substanz auf einem spiegelnden Untergrund umfasst, wobei die fluoreszierenden Substanz ein Beschichtungsmittel in Form eines Öltropfens ist, wobei die erfasste erste und zweite Leistung ausschließlich auf der Eigenfluoreszenz der fluoreszierenden Substanz basiert, sodass der fluoreszierenden Substanz keine zusätzlichen Farbstoffe beigemischt sind, und wobei eine optische Weglänge der Fluoreszenzstrahlung ausgewertet wird, sodass die abgeleitete Dicke der Schicht unabhängig von der Orientierung der Probe ist.

Soweit das Verfahren mit einer Vorrichtung gemäß dieser Erfindung ausgeführt wird, so weist diese die entsprechenden Einrichtungen hierfür auf. Insbesondere sind Ausführungsformen der Vorrichtung zum Ausführen der zuvor beschriebenen Ausführungsformen des Verfahrens geeignet. Weitere Vorteile, Merkmale und Anwendungsmöglichkeiten der vorliegenden Erfindung werden anhand der folgenden Beschreibung einer Ausführungsform und der dazugehörigen Figuren deutlich. In den Figuren sind gleiche Elemente mit gleichen Bezugszeichen bezeichnet.

Figur 1    zeigt eine schematische Darstellung einer Vorrichtung gemäß einer Ausführungsform der vorliegenden Erfindung.

Figur 2    zeigt beispielhaft den Überlapp zwischen Fluoreszenz- und Absorptionsspektrum einer Probe.

Figur 3a    zeigt die Wellenlängen- und Schichtdickenabhängigkeit eines Fluoreszenzspektrums.

Figur 3b    zeigt eine Kalibrationskurve gemäß einer Ausführungsform der vorliegenden Erfindung.

Figur 4a    zeigt die Lichtleitung der Anregungsstrahlung in einer Beschichtung.

Figur 4b    zeigt die Emission einer Fluoreszenzstrahlung in einer Beschichtung nach Anregung mit einer Anregungsstrahlung.

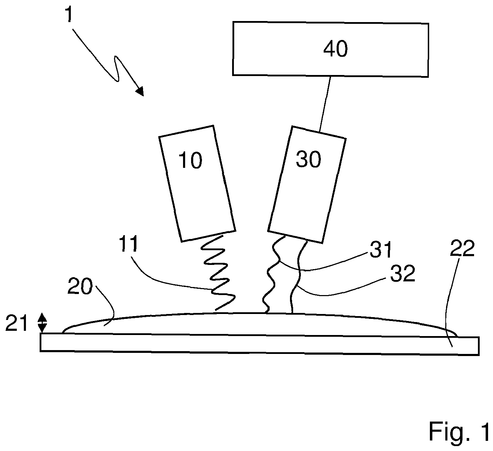

Gemäß Figur 1 weist die Vorrichtung 1 zum Bestimmen einer Dicke 21 einer Schicht 20 einer fluoreszierenden Substanz eine Anregungsstrahlungsquelle 10 auf, mit welcher eine elektromagnetische Anregungsstrahlung 11 mit einer Wellenlänge von 365 nm auf die Schicht 20 abgestrahlt wird. Die Schicht 20 befindet sich auf einem reflektierenden Untergrund 22.

Durch das Auftreffen der Anregungsstrahlung 11 auf die Schicht 20 werden in der Schicht 20 Moleküle in einen energetisch höheren Zustand angeregt. Nach einer gewissen Zeit relaxieren die angeregten Moleküle zurück in ihren Grundzustand unter Aussendung einer Fluoreszenzstrahlung 31, 32. Zur Detektion dieser Fluoreszenzstrahlung 31, 32 weist die erfindungsgemäße Vorrichtung 1 eine Messeinrichtung 30 auf, mit welcher die Leistung einer Fluoreszenzstrahlung mit einer ersten Wellenlänge 31 und die Leistung einer Fluoreszenzstrahlung mit einer zweiten Wellenlänge 32 detektiert wird.

Um die detektierte erste und zweite Leistung der Fluoreszenzstrahlung 31, 30 auszuwerten, weist die erfindungsgemäße Vorrichtung 1 weiterhin eine Auswerteeinrichtung 40 auf, die mit der Messeinrichtung 30 verbunden ist. Die erfasste erste und zweite Leistung wird von der Messeinrichtung 30 an die Auswerteeinrichtung 40 übergeben und die Auswerteeinrichtung 40 bildet einen Quotienten aus der ersten und zweiten Leistung. Anhand dieses gebildeten Quotienten wertet die Auswertungseinrichtung 40 eine Dicke 21 der Schicht 20 aus.

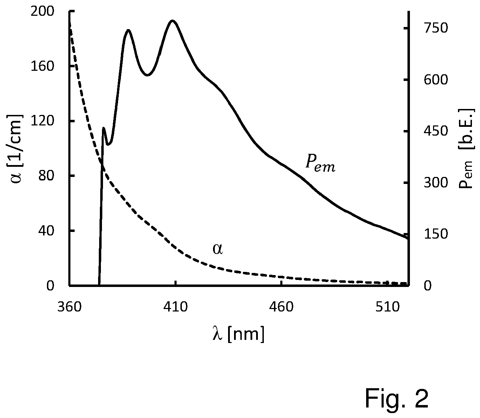

Die Schicht 20 weist einen wellenlängenabhängigen Absorptionskoeffizienten $\alpha$ sowie eine wellenlängenabhängige Fluoreszenz $P_{em}$ auf. Das Absorptions- und Fluoreszenzspektrum der Schicht 20 ist in Figur 2 dargestellt. Gemäß Figur 2 besteht ein Überlapp zwischen dem Absorptionsspektrum und dem Fluoreszenzspektrum der Probe, d.h. dass sowohl der Absorptionskoeffizient $\alpha$ als auch das Fluoreszenzspektrum in dem gleichen Wellenlängenbereich von Null verschiedene Werte aufweisen.

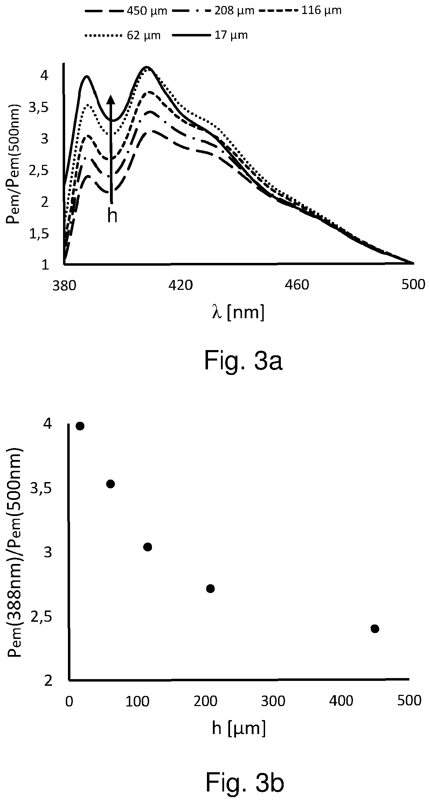

Gemäß der in den folgenden Figuren 3a und 3b gezeigten Ausführungsform des Verfahrens, wird die erste Fluoreszenzwellenlänge auf 388 nm festgelegt, wobei aus Figur 2 ersichtlich ist, dass der Absorptionskoeffizient der Schicht 20 bei dieser ersten Fluoreszenzwellenlänge einen von Null verschiedenen Wert aufweist. Dies führt dazu, dass die mit der ersten Fluoreszenzwellenlänge abgestrahlte Fluoreszenzstrahlung 31 eine Absorption gemäß dem entsprechenden Absorptionskoeffizienten $\alpha$ erfährt. Die zweite Fluoreszenzwellenlänge wird auf 500 nm festgelegt, wobei aus Figur 2 ersichtlich ist, dass die mit der zweiten Fluoreszenzwellenlänge abgestrahlte Fluoreszenzstrahlung 33 keine Absorption erfährt.

Figur 3a zeigt die unmittelbaren Folgen des Überlapps des Absorptions- und Fluoreszenzspektrums der Schicht 20 für die gemessene Leistung der Fluoreszenzstrahlung. Je nach Wellenlänge der erfassten Fluoreszenzstrahlung zeigt sich eine mehr oder weniger starke Abhängigkeit von der Dicke 21 der zu untersuchenden Schicht 20. Dies ist eine direkte Folge der Absorption der emittierten Fluoreszenzstrahlung 31, 32. Gemäß Figur 3a wurde die erfasste Leistung der Fluoreszenzstrahlung auf eine Leistung der Fluoreszenzstrahlung bei 500 nm normiert, um die Abhängigkeit der Fluoreszenzstrahlung von der Schichtdicke aufgrund des Überlapps mit dem Absorptionsspektrum zu verdeutlichen.

Bildet man den Quotienten aus der erfassten ersten und zweiten Leistung der Fluoreszenzstrahlung, so kann die Dicke 21 der Schicht 20 abgeleitet werden, wenn der Absorptionskoeffizient α bei der ersten und zweiten Wellenlänge der Fluoreszenzstrahlung bekannt ist. Trägt man den gebildeten Quotienten gegen die abgeleitete Dicke 21 der Schicht 20 auf, so ergibt sich das in Figur 3b dargestellte Diagramm.

Sollte der Absorptionskoeffizient α der Schicht 20 nicht bekannt sein, so kann der in Figur 3b dargestellte Datensatz auch als eine Kalibrationskurve verwendet werden. Um eine solche Kalibrationskurve zu erhalten, wird das erfindungsgemäße Verfahren an Proben mit einer bekannten Dicke 21 angewendet. So kann dem ermittelten Quotienten eine Dicke 21 zugeordnet werden. Auf diese Weise ergibt sich eine Kalibrationskurve, wie sie in Figur 3b dargestellt ist. Durch die Interpolation zwischen einzelnen Kalibrationspunkten können so auch Dicken 21 von Schichten 20 bestimmt werden, deren Verhältnis der ersten und zweiten Leistung an einer Schicht 20 mit einer unbekannten Schichtdicke 21 bestimmt wurde.

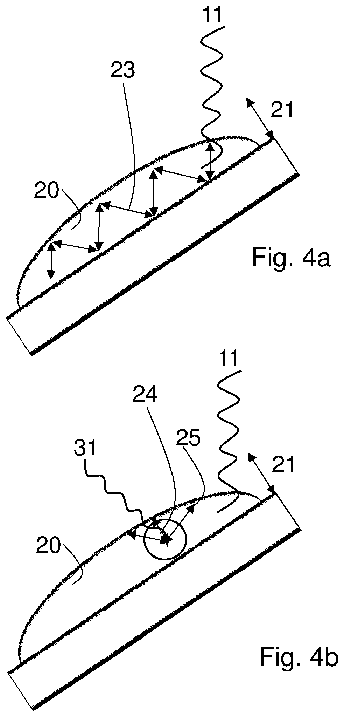

Die Figuren 4a und 4b verdeutlichen den Vorteil des erfindungsgemäßen Verfahrens, dass dieses unabhängig von der Orientierung der Schicht 20 zur Messeinrichtung 30 ist. Figur 4a zeigt wie die Anregungsstrahlung 11 in der Beschichtung 20 propagiert. Die optische Weglänge d entspricht der Summe der Pfeile 23. Verwendet man nun die eingangs beschriebene Formel zur Bestimmung der Schichtdicke 21 unter Verwendung des Absorptionskoeffizienten α der Anregungsstrahlung 11, so wird lediglich die optische Weglänge d der Anregungsstrahlung 11 bestimmt, die der Summe der Pfeile 23 entspricht und damit deutlich von der Schichtdicke 21 abweicht.

Verwendet man hingegen die Absorption der Fluoreszenzstrahlung 31, 32 zur Bestimmung der Schichtdicke 21 der Schicht 20, wie in Figur 4b dargestellt, so ist die Differenz zwischen Schichtdicke 21 und optischer Weglänge d, die einem der Pfeile 25 entspricht, deutlich geringer. Dies liegt daran, dass die zur Fluoreszenz angeregten Moleküle vereinfacht als Kugelstrahler 24 angenommen werden können. D.h. die Fluoreszenzstrahlung 31, 32 wird isotrop in alle Raumrichtungen, wie durch die Pfeile 25 angedeutet, abgegeben.

Damit ist die mit der erfindungsgemäßen Vorrichtung 1 bzw. dem erfindungsgemäßen Verfahren erfasste Schichtdicke 21 der Schicht 20 deutlich weniger fehlerbehaftet als bei aus dem Stand der Technik bekannten Verfahren, da die Leistung der Anregungsstrahlung 11 nicht mit in die Auswertung der Schichtdicke 21 einfließt und nur die optische Weglänge gemäß einem der Pfeile 25 der Fluoreszenzstrahlung 31, 32 für die Auswertung der Schichtdicke 21 herangezogen wird.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen, und soweit dies im Schutzbereich der Erfindung bleibt, wobei der Schutzbereich der Erfindung in den beigefügten Ansprüchen definiert ist.

Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung, deren Schutzbereich in den beigefügten Ansprüchen definiert ist, ist nicht auf die offenbarten Ausführungsformen beschränkt.

Abwandlungen der offenbarten Ausführungsformen sind für den Fachmann aus den Zeichnungen, der Beschreibung und den beigefügten Ansprüchen offensichtlich. In den Ansprüchen schließt das Wort "aufweisen" nicht andere Merkmale oder Schritte aus und der unbestimmte Artikel "einer" oder "ein" schließt eine Mehrzahl nicht aus. Die bloße Tatsache, dass bestimmte Merkmale in unterschiedlichen Ansprüchen beansprucht sind, schließt ihre Kombination nicht aus. Bezugszeichen in den Ansprüchen sind nicht als Beschränkung des Schutzbereichs gedacht.

## Bezugszeichenliste

| 1  | Vorrichtung |
|----|-------------|
| 10 | Anregungsstrahlungsquelle |
| 11 | elektromagnetische Anregungsstrahlung |
| 20 | Schicht |
| 21 | Dicke einer Schicht |
| 22 | Untergrund der Schicht |
| 23 | optische Weglänge der Anregungsstrahlung |
| 24 | Coolstrahler der Fluoreszenzstrahlung |
| 25 | optische Weglänge der absorbierten Fluoreszenzstrahlung |
| 30 | Messeinrichtung |
| 31 | erste Fluoreszenzwellenlänge |
| 32 | zweite Fluoreszenzwellenlänge |
| 40 | Auswertungseinrichtung |

## Patentansprüche

1. Verfahren zum Bestimmen einer Dicke (21) einer Schicht (20) einer fluoreszierenden Substanz,

   wobei die fluoreszierende Substanz einen wel-

lenlängenabhängigen Absorptionskoeffizienten ($\alpha$) und eine wellenlängenabhängige Fluoreszenz ($P_{em}$) aufweist, wobei der Absorptionskoeffizient ($\alpha$) zumindest bei einer ersten oder einer zweiten Fluoreszenzwellenlänge einen von Null verschiedenen Wert aufweist und wobei das Verfahren die Schritte aufweist

A) Anregen der Schicht (20) mit einer elektromagnetischen Anregungsstrahlung (11),
B) Erfassen einer ersten Leistung einer von der Schicht (20) mit einer ersten Fluoreszenzwellenlänge abgestrahlten Fluoreszenzstrahlung (31),
C) Erfassen einer zweiten Leistung einer von der Schicht (20) mit einer zweiten Fluoreszenzwellenlänge abgestrahlten Fluoreszenzstrahlung (32), wobei die erste Fluoreszenzwellenlänge und die zweite Fluoreszenzwellenlänge voneinander verschieden sind und wobei die erste und die zweite Leistung von Null verschiedene Werte aufweisen,
D) Bilden eines Quotienten aus der ersten Leistung und der zweiten Leistung, und
E) Ableiten der Dicke (21) der Schicht (20) aus dem Quotienten,

wobei die Anregungsstrahlung (11) eine Anregungswellenlänge hat, und
wobei die Anregungswellenlänge und die erste und zweite Fluoreszenzwellenlänge voneinander verschieden sind,

**dadurch gekennzeichnet,**

**dass** die fluoreszierende Substanz ein Beschichtungsmittel in Form eines Öltropfens ist,
wobei der Öltropfen auf einem spiegelnden Untergrund angeordnet ist,
wobei die erfasste erste und zweite Leistung ausschließlich auf der Eigenfluoreszenz der fluoreszierenden Substanz basiert, sodass der fluoreszierenden Substanz keine zusätzlichen Farbstoffe beigemischt werden, und
wobei eine optische Weglänge der Fluoreszenzstrahlung ausgewertet wird, sodass die in Schritt E) abgeleitete Dicke (21) der Schicht (20) unabhängig von der Orientierung der Probe ist.

2. Verfahren nach dem vorhergehenden Anspruch, wobei das Verfahren weiterhin die Schritte umfasst

i. Bereitstellen eines vorherbestimmten ersten Absorptionskoeffizienten der fluoreszierenden Substanz bei der ersten Fluoreszenzwellenlänge,
ii. Bereitstellen eines vorherbestimmten zweiten Absorptionskoeffizienten der fluoreszierenden Substanz bei der zweiten Fluoreszenzwellenlänge,
wobei der erste Absorptionskoeffizient und der zweite Absorptionskoeffizient voneinander verschieden sind, und
wobei das Ableiten der Dicke (21) der Schicht (20) aus dem Quotienten in Schritt E) unter Verwendung der ersten und zweiten Absorptionskoeffizienten erfolgt.

3. Verfahren nach Anspruch 1, wobei das Ableiten der Dicke (21) der Schicht (20) aus dem Quotienten in Schritt E) unter Verwendung von Kalibrationsdaten erfolgt, wobei die Kalibrationsdaten bei Messungen der ersten und zweiten Leistung gemäß der Schritte A) bis D) an einer Mehrzahl von Schichten (20) mit jeweils einer bekannten Dicke (21) gewonnen werden, so dass dem in Schritt D) gebildeten Quotienten eine Dicke (21) der Schicht (20) zuordenbar ist.

4. Verfahren nach einem der vorhergehenden Ansprüche soweit von Anspruch 2 abhängig, wobei die erste oder die zweite Fluoreszenzwellenlänge so gewählt werden, dass der erste oder zweite Absorptionskoeffizient der fluoreszierenden Substanz bei der gewählten ersten oder zweiten Fluoreszenzwellenlänge Null beträgt.

5. Vorrichtung (1) zum Bestimmen einer Dicke (21) einer Schicht (20) einer fluoreszierenden Substanz aufweisend

eine Anregungsstrahlungsquelle (10),
wobei die Anregungsstrahlungsquelle (10) derart eingerichtet ist, dass mit der Anregungsstrahlungsquelle (10) während des Betriebs der Vorrichtung (1) eine elektromagnetische Anregungsstrahlung (11) auf die Schicht (20) abstrahlbar ist,
eine Messeinrichtung (30), wobei die Messeinrichtung (30) derart eingerichtet ist, dass während des Betriebs der Vorrichtung (10) mit der Messeinrichtung (30) eine erste Leistung einer von der Schicht (20) mit einer ersten Fluoreszenzwellenlänge abgestrahlten Fluoreszenzstrahlung (31) erfassbar ist, und
eine Auswertungseinrichtung (40),
wobei die Messeinrichtung (30) derart eingerichtet ist, dass mit der Messeinrichtung (30) während des Betriebs der Vorrichtung (1) weiterhin eine zweite Leistung einer von der Schicht (20) mit einer zweiten Fluoreszenzwellenlänge abgestrahlten Fluoreszenzstrahlung (32) erfassbar ist, wobei die erste Fluoreszenzwellenlänge und die zweite Fluoreszenzwellenlänge voneinander verschieden sind,

wobei die Auswertungseinrichtung (40) derart wirksam mit der Messeinrichtung (30) verbunden ist, dass während des Betriebs der Vorrichtung (1) die von der Messeinrichtung (30) erfasste erste und zweite Leistung an die Auswertungseinrichtung (40) übergeben werden, wobei die Auswertungseinrichtung (40) derart eingerichtet ist, dass die Auswertungseinrichtung (40) während des Betriebs der Vorrichtung (1) einen Quotienten aus der ersten und zweiten Leistung bildet und aus dem Quotienten die Dicke (21) der Schicht (20) ableitet,

wobei die Anregungsstrahlung (11) eine Anregungswellenlänge hat, und

wobei die Anregungswellenlänge und die erste und zweite Fluoreszenzwellenlänge voneinander verschieden sind, **dadurch gekennzeichnet, dass**

die Vorrichtung (1) die fluoreszierende Substanz auf einem spiegelnden Untergrund umfasst,

wobei die fluoreszierenden Substanz ein Beschichtungsmittel in Form eines Öltropfens ist, wobei die erfasste erste und zweite Leistung ausschließlich auf der Eigenfluoreszenz der fluoreszierenden Substanz basiert, sodass der fluoreszierenden Substanz keine zusätzlichen Farbstoffe beigemischt sind, und

wobei eine optische Weglänge der Fluoreszenzstrahlung ausgewertet wird, sodass die abgeleitete Dicke (21) der Schicht (20) unabhängig von der Orientierung der Probe ist.

## Claims

1. A method for determining a thickness (21) of a layer (20) of a fluorescent substance, wherein the fluorescent substance has a wavelength-dependent absorption coefficient ($\alpha$) and a wavelength-dependent fluorescence ($P_{em}$), wherein the absorption coefficient ($\alpha$) has a non-zero value at least at a first or a second fluorescence wavelength, and

the method comprising the steps of

A) exciting the layer (20) with an electromagnetic excitation radiation (11),
B) detecting a first power of fluorescence radiation (31) comprising a first fluorescence wavelength emitted by the layer (20),
C) detecting a second power of fluorescence radiation (32) comprising a second fluorescence wavelength emitted from the layer (20), wherein the first fluorescence wavelength and the second fluorescence wavelength are different from each other, and wherein the first power and the second power have non-zero values,
D) forming a quotient from the first power and the second power, and
E) deriving the thickness (21) of the layer (20) from the quotient,

wherein the excitation radiation (11) comprises an excitation wavelength, and

wherein the excitation wavelength and the first and second fluorescence wavelengths are different from each other,

**characterised in that**

the fluorescent substance is a coating agent in the form of an oil droplet, wherein the oil drop is placed on a reflective background, wherein the detected first power and second power is based solely on the intrinsic fluorescence of the fluorescent substance, such that no additional dyes are added to the fluorescent substance, and

wherein an optical path length of the fluorescence radiation is evaluated so that the thickness (21) of the layer (20) derived in step E) is independent of the orientation of the sample.

2. The method according to the preceding claim, the method further comprising the steps of

i. providing a predetermined first absorption coefficient of the fluorescent substance at the first fluorescence wavelength,
ii. providing a predetermined second absorption coefficient of the fluorescent substance at the second fluorescence wavelength,

wherein the first absorption coefficient and the second absorption coefficient are different from each other, and

wherein deriving the thickness (21) of the layer (20) from the quotient in step E) is carried out using the first and second absorption coefficients.

3. The method according to claim 1, wherein deriving the thickness (21) of the layer (20) from the quotient in step E) is carried out using calibration data, wherein the calibration data are obtained during measurements of the first and second power according to steps A) to D) on a plurality of layers (20) each having a known thickness (21), so that a thickness (21) of the layer (20) can be assigned to the quotient formed in step D).

**4.** The method according to any one of the preceding claims insofar as dependent on claim 2, wherein the first or second fluorescence wavelength is selected such that the first or second absorption coefficient of the fluorescent substance at the selected first or second fluorescence wavelength is zero.

**5.** A device (1) for determining a thickness (21) of a layer (20) of a fluorescent substance comprising

an excitation radiation source (10),
wherein the excitation radiation source (10) is arranged in such a way that electromagnetic excitation radiation (11) can be emitted onto the layer (20) by the excitation radiation source (10) during operation of the device (1),
a measuring means (30), the measuring means (30) being arranged in such a way that, during operation of the device (10), a first power of a fluorescence radiation (31) emitted by the layer (20) with a first fluorescence wave length is detectable with the measuring means (30), and
an evaluation means (40),
wherein the measuring means (30) is arranged in such a way that a second power of a fluorescence radiation (32) emitted by the layer (20) with a second fluorescence wavelength is furthermore detectable with the measuring means (30) during the operation of the device (1), wherein the first fluorescence wavelength and the second fluorescence wavelength are different from each other, the evaluation means (40) being operatively connected to the measuring means (30) in such a way that, during the operation of the device (1), the first and second power detected by the measuring means (30) are transferred to the evaluation means (40), the evaluation means (40) being set up in such a way that, during the operation of the device (1), the evaluation means (40) forms a quotient from the first and second power and derives the thickness (21) of the layer (20) from the quotient, wherein the excitation radiation (11) has an excitation wavelength, and

wherein the excitation wavelength and the first and second fluorescence wavelengths are different from each other, **characterised in that**

the device (1) comprises the fluorescent substance on a reflective substrate, wherein the fluorescent substance is a coating agent in the form of an oil droplet, wherein the detected first and second power is based solely on the intrinsic fluorescence of the fluorescent substance, such that no additional dyes are added to the fluorescent substance, and
wherein an optical path length of the fluorescence radiation is evaluated so that the derived thickness (21) of the layer (20) is independent of the orientation of the sample.

**Revendications**

**1.** Procédé pour déterminer l'épaisseur (21) d'une couche (20) d'une substance fluorescente,

la substance fluorescente ayant un coefficient d'absorption ($\alpha$) dépendant de la longueur d'onde et une fluorescence ($P_{em}$) dépendant de la longueur d'onde, le coefficient d'absorption ($\alpha$) ayant une valeur différente de zéro au moins pour une première ou une seconde longueur d'onde de fluorescence, et
le procédé comprenant les étapes consistant à :

A) exciter la couche (20) avec un rayonnement d'excitation électromagnétique (11),
B) détecter une première puissance d'un rayonnement fluorescent (31) émis par la couche (20) avec une première longueur d'onde de fluorescence,
C) détecter une seconde puissance d'un rayonnement fluorescent (32) émis par la couche (20) avec une seconde longueur d'onde de fluorescence, la première longueur d'onde fluorescente et la seconde longueur d'onde fluorescente étant différentes l'une de l'autre et les première et seconde puissances ayant des valeurs différentes de zéro,
D) former un quotient de la première puissance et la seconde puissance, et
E) déduire l'épaisseur (21) de la couche (20) à partir du quotient,

le rayonnement d'excitation (11) ayant une longueur d'onde d'excitation, et
la longueur d'onde d'excitation et les première et seconde longueurs d'onde de fluorescence étant différentes les unes des autres,
**caractérisé en ce que**,

la substance fluorescente est un agent de revêtement sous la forme d'une goutte d'huile,
la goutte d'huile étant agencée sur un support réfléchissant,
les première et seconde puissance enregistrées étant exclusivement basées sur l'auto-fluorescence de la substance fluorescente, de sorte qu'aucun colorant supplémentaire n'est ajouté à la substance fluorescente, et

une longueur de trajet optique du rayonnement fluorescent étant évaluée, de sorte que l'épaisseur (21) de la couche (20) déduite à l'étape E) soit indépendante de l'orientation de l'échantillon.

2. Procédé selon la revendication précédente, le procédé comprenant en outre les étapes consistant à :

i. fournir un premier coefficient d'absorption prédéterminé de la substance fluorescente à la première longueur d'onde de fluorescence,
ii. fournir un second coefficient d'absorption prédéterminé de la substance fluorescente à la seconde longueur d'onde de fluorescence,
le premier coefficient d'absorption et le second coefficient d'absorption étant différents l'un de l'autre, et
l'épaisseur (21) de la couche (20) étant dérivée du quotient à l'étape E) en utilisant les premier et second coefficients d'absorption.

3. Procédé selon la revendication 1, la déduction de l'épaisseur (21) de la couche (20) à partir du quotient à l'étape E) étant effectuée en utilisant des données d'étalonnage, les données d'étalonnage étant obtenues lors de mesures des première et seconde puissances conformément aux étapes A) à D) sur une pluralité de couches (20) ayant chacune une épaisseur connue (21), de sorte qu'une épaisseur (21) de la couche (20) puisse être attribuée au quotient formé dans l'étape D).

4. Procédé selon l'une quelconque des revendications précédentes, dans la mesure où elles dépendent de la revendication 2, la première ou la seconde longueur d'onde de fluorescence étant choisie de telle sorte que, à la première ou à la seconde longueur d'onde de fluorescence choisie, le premier ou le second coefficient d'absorption de la substance fluorescente soit égal à zéro.

5. Dispositif (1) pour déterminer une épaisseur (21) d'une couche (20) d'une substance fluorescente, comprenant

une source de rayonnement d'excitation (10), la source de rayonnement d'excitation (10) étant configurée de telle sorte que, pendant le fonctionnement du dispositif (1), un rayonnement d'excitation électromagnétique (11) puisse être émis sur la couche (20) à l'aide de la source de rayonnement d'excitation (10),
un dispositif de mesure (30), le dispositif de mesure (30) étant configuré de telle sorte que, pendant le fonctionnement du dispositif (10) avec le dispositif de mesure (30), une première puissance d'un rayonnement fluorescent (31) émis par la couche (20) avec une première longueur d'onde de fluorescence puisse être détectée, et
un dispositif d'évaluation (40),
le dispositif de mesure (30) étant configuré de telle sorte que, pendant le fonctionnement du dispositif (1), une seconde puissance d'un rayonnement fluorescent (32) émis par la couche (20) avec une seconde longueur d'onde de fluorescence puisse être détectée à l'aide du dispositif de mesure (30), la première longueur d'onde de fluorescence et la seconde longueur d'onde fluorescente étant différentes l'une de l'autre,
le dispositif d'évaluation (40) étant relié de manière si efficace au dispositif de mesure (30) que, pendant le fonctionnement du dispositif (1), les première et seconde puissances détectées par le dispositif de mesure (30) soient transmises au dispositif d'évaluation (40), le dispositif d'évaluation (40) étant configuré de telle sorte que, pendant le fonctionnement du dispositif (1), le dispositif d'évaluation (40) forme un quotient des première et seconde puissances et déduit l'épaisseur (21) de la couche (20) à partir du quotient,
le rayonnement d'excitation (11) ayant une longueur d'onde d'excitation, et
la longueur d'onde d'excitation et les première et seconde longueurs d'onde de fluorescence étant différentes les unes des autres, **caractérisé en ce que**
le dispositif (1) comprend la substance fluorescente sur un support réfléchissant,
la substance fluorescente étant un agent de revêtement sous la forme d'une goutte d'huile,
les première et seconde puissances enregistrées étant exclusivement basées sur l'autofluorescence de la substance fluorescente, de sorte qu'aucun colorant supplémentaire ne soit ajouté à la substance fluorescente, et
une longueur de trajet optique du rayonnement fluorescent étant évaluée de sorte que l'épaisseur déduite (21) de la couche (20) soit indépendante de l'orientation de l'échantillon.

Fig. 1

Fig. 2

Fig. 3a

Fig. 3b

Fig. 4a

Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2014176965 A1
- US 4841156 A

- US 6252237 B1

**In der Beschreibung aufgeführte Nicht-Patentliteratur**

- **CARLOS HIDROVO et al.** 2D Thickness and Temperature Mapping of Fluids by Means of a Two-Dye Laser Induced Fluorescence Radiometric Scheme. *JOURNAL OF FLOW VISUALIZATION & IMAGE PROCESSING,* 01. Januar 2002, vol. 9, 171-191

- **CARLOS HIDROVO et al.** 2D Thickness and Temperature Mapping ofFluids by Means of a Two-Dye Laser Induced Fluorescence Radiometric Scheme. *JOURNAL OF FLOW VISUALIZATION & IMAGE PROCESSING,* 01. Januar 2002, vol. 9, 171-191